## Europäisches Patentamt
## European Patent Office
## Office européen des brevets

(19)

(11) Numéro de publication: **0 028 182**
**B1**

(12)
# FASCICULE DE BREVET EUROPEEN

(45) Date de publication du fascicule du brevet:
16.05.84

(51) Int. Cl.³: **G 01 S 13/34, G 01 S 13/64**

(21) Numéro de dépôt: 80401468.6

(22) Date de dépôt: 14.10.80

(54) Radar aéroporté à modulation de fréquence et son utilisation dans un autodirecteur de missile.

(30) Priorité: 26.10.79 FR 7926612

(43) Date de publication de la demande:
06.05.81 Bulletin 81/18

(45) Mention de la délivrance du brevet:
16.05.84 Bulletin 84/20

(84) Etats contractants désignés:
DE GB IT

(73) Titulaire: **THOMSON-CSF, 173, Boulevard Haussmann, F-75379 Paris Cedex 08 (FR)**

(72) Inventeur: **Tabourier, Rémy, "THOMSON-CSF" SCPI 173, Bld Haussmann, F-75360 Paris Cedex 08 (FR)**

(74) Mandataire: **Benoit, Monique et al, THOMSON-CSF SCPI 173, Bld Haussmann, F-75379 Paris Cedex 08 (FR)**

(56) Documents cités:
**DE - C - 1 801 270**
**FR - A - 2 408 149**
**US - A - 3 742 499**

**IRE INTERNATIONAL CONVENTION RECORD, vol. 10, no. 5, mars 1962 NEW YORK (US) G.R. HETRICH: "Frequency modulation techniques as applied to pulse Doppler radar", pages 76-86**
**THE RADIO AND ELECTRONIC ENGINEER, vol. 42, no. 7, juillet 1972 LONDRES (GB) A. TONKIN et al.: "An application of correlation to radar systems", pages 344-348**

**Le dossier contient des informations techniques présentées postérieurement au dépôt de la demande et ne figurant pas dans le présent fascicule.**

**0 028 182**

Radar aéroporté a modulation de fréquence et son utilisation dans un autodirecteur de missile

La présente invention concerne un radar aéroporté à modulation de fréquence et son utilisation dans un autodirecteur de missile.

Dans certains équipements, comme par exemple les autodirecteurs de missiles, il est nécessaire de disposer d'un radar présentant un encombrement réduit, et donnant une bonne résolution à la fois en distance et vitesse.

Pour répondre à ce besoin, les radars des autodirecteurs équipant les missiles, par exemple contre cibles marines et relevant de l'art antérieur mettent en oeuvre une puissance de crête élevée. Les performances de ces radars sont alors satisfaisantes en présence d'une cible isolée, et leur puissance élevée, voire surabondante, les protègent contre certains types de brouilleur; cependant, dans les conditions actuelles, il est nécessaire d'une part de pouvoir isoler une cible au sein d'un environnement complexe ce qui implique pour l'équipement une résolution accrue en distance telle que la puissance émise par l'autodirecteur ne constitue plus un bouclier efficace, et d'aure part d'être discret vis-à-vis des détecteurs d'alerte.

La présente invention vise à remplir ces conditions de résolution par la définition d'un radar à modulation de fréquence disposant d'un émetteur à l'état solide comportant par exemple des éléments semiconducteurs. La modulation de fréquence permet de travailler avec des signaux émis et reçus cohérents autorisant une amélioration du pouvoir séparateur en distance et en vitesse, et l'émetteur à l'état solide apporte un certain nombre d'avantages dont l'art antérieur était dépourvu;

— réduction des bruits parasites appliqués aux circuits numériques de l'autodirecteur et des appareils environnants;
— augmentation de la fiabilité par diminution de la température locale;
— une grande discrétion vis-à-vis des détecteurs d'alerte à large bande de fréquence (les seuls actuellement sur de petites unites);
— utilisation de composants actifs a priori plus fiables qu'un tube oscillateur ou amplificateur, surtout au regard des durées élevées de stockage;
— une agilité en fréquence, si le besoin s'en présente, très supérieure à celles des magnétrons utilisés dans les autodirecteurs de l'art antérieur;
— diminution de la microphonie par rapport aux émetteurs à tubes, et notamment par rapport au magnétron à fréquence agile qui comporte des pièces électromécaniques, donc fragiles.

On connaît, dans le brevet français FR-A-2 408 149 au nom de THOMSON-CSF, un radar aéroporté utilisant un émetteur à l'état solide générant une onde quasi continue modulée en fréquence par une dent de scie qui présente une période active $T_1$ très supérieure à la durée $T_2$ du retour ($T_2 < 0{,}01\ T_1$). Le signal émis peut être interrompu pendant le temps $T_2$ du retour de la dent de scie à l'aide d'un signal de même période que la dent de scie et en forme de créneau de largeur $T_1$. La distance mesurée présente une ambiguité en vitesse.

La présente invention permet de remédier à cet inconvénient en modulant en impulsions le signal émis, qui est également modulé linéairement en fréquence, la modulation en impulsion donnant une résolution en distance du même ordre que la résolution en distance fournie par la modulation de fréquence.

Selon une caractéristique de l'invention, le radar aéroporté à modulation de fréquence pour la détection de cible, associé à une antenne émission-réception et à un duplexeur alimenté par une partie émission qui comprend: des moyens d'émission recevant, délivré par des premiers moyens de modulation pour la modulation en fréquence du signal émis, un signal de modulation en dent de scie d'amplitude $N \cdot \Delta F$ et de période $N \cdot T_R$ avec N un nombre entier quelconque et, délivré par des deuxièmes moyens de modulation, un signal pour la modulation en impulsions du signal émis, ledit duplexeur délivrant les signaux reçus par l'antenne à une partie réception qui comprend en série des premiers moyens de transposition en fréquence qui reçoivent sur une première entrée les signaux échos réfléchis par les cibles et sur une deuxième entrée des signaux de fréquence égale à la somme, effectuée dans des deuxièmes moyens de transposition, de la fréquence du signal issu d'un premier oscillateur et de la fréquence porteuse, modulée en fréquence et prélevée sur les moyens d'émission, des moyens de sélectivité en distance; des moyens de démodulation, ledit radar est caractérisé en ce que, les moyens de réception comprenant en outre des moyens d'échantillonnage, de codage et de filtrage des signaux démodulés, la modulation en impulsions du signal émis est telle que chaque impulsion de modulation délivrée par les deuxièmes moyens de modulation a une durée sensiblement égale à $\gamma = 1/N \cdot \Delta F$, une période $T_R$, et en ce que les impulsions sont au nombre de N pendant une période $NT_R$ du signal en dent de scie généré par les pemiers moyens de modulation de façon que les résolutions en distance données par la modulation en impulsions et la modulation en fréquence soient voisines.

D'autres avantages et caractéristiques de l'invention ressortiront de la description qui suit, illustrée par les figures qui représentent:

2

- la figure 1, un premier exemple de réalisation du radar à modulation de fréquence selon l'invention;
- la figure 2, un exemple de réalisation du circuit de sélection en distance;
- la figure 3, un diagramme montrant un exemple des domaines de répartition des échos de sol et des cibles
- la figure 4, un diagramme montrant l'ambiguité en distance due au choix de la fréquence de répétition, en l'absence de modulation de fréquence;
- la figure 5, un diagramme illustrant le choix de la pente de la modulation de fréquence et,
- la figure 6, un second exemple de réalisation du radar selon l'invention.

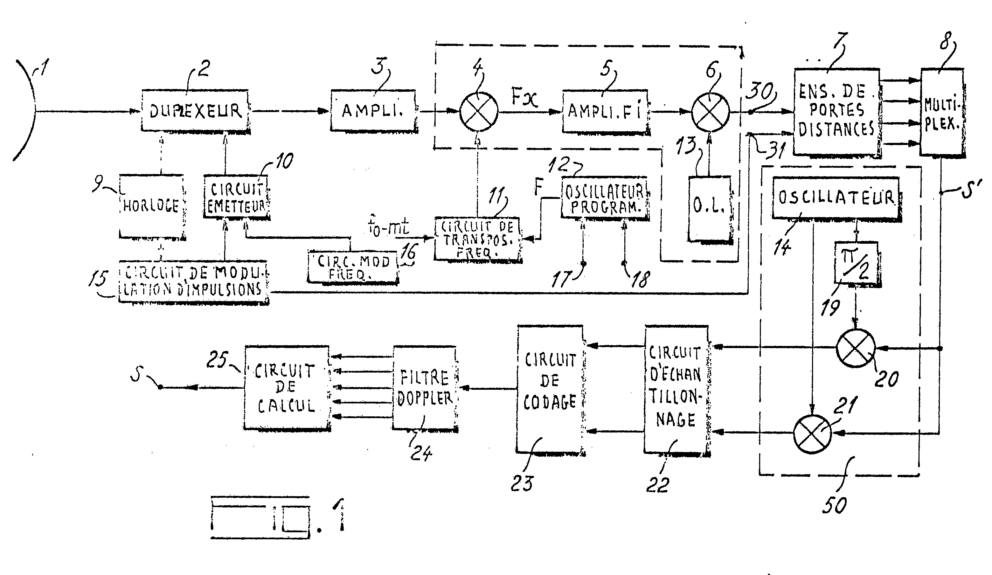

La figure 1 montre le schéma général d'un premier exemple de réalisation du radar aéroporté à modulation de fréquence selon l'invention.

Il comporte successivement, une antenne 1, un duplexeur 2, un amplificateur hyperfréquence à faible bruit 3, un premier mélangeur 4, un premier amplificateur à fréquence intermédiaire 5, un second mélangeur 6, un ensemble de portes distances 7, un multiplexeur 8, un troisième et un quatrième mélangeur 20 et 1 montés en parallèle, un circuit d'échantillonnage 22, un circuit de codage 23, un ensemble de filtres Doppler 24 et un circuit de calcul 25 non décrit ici et permettant l'utilisation des informations reçues par exemple pour l'asservissement des commandes du missile sur lequel il est monté. Un circuit d'horloge 9 est connecté au duplexeur 2 et d'autre part au modulateur d'impulsions 15 connecté à un circuit émetteur 10 lui-même connecté au duplexeur 2. Un oscillateur 16 générateur de rampe en dent de scie à pente négative ou positive est connecté au circuit émetteur 10, et au mélangeur 4 par l'intermédiaire d'un circuit 11 de transposition en fréquence pouvant être par exemple un modulateur à bande latérale unique. Ce circuit de transposition de fréquence 11 est également connecté à un oscillateur programmable 12. Un oscillateur local 1 est connecté au mélangeur 6, et un générateur 14 des signaux adaptés à la démodulation est connecté directement au mélangeur 21 et par l'intermédiaire d'un circuit 19 déphaseur de $\Pi/2$ au mélangeur 20. L'ensemble des mélangeurs 20, 21 du déphaseur 19 et du générateur 14 constituent le circuit de démodulation 50.

On donne dans ce qui suit le fonctionnement du système décrit ci-dessus dans lequel on suppose à titre d'exemple que la modulation de fréquence, périodique d'amplitude $N \Delta F$ où $N$ est un entier quelconque se fait selon une loi en dent de scie à pente négative $(-m)$, de période $NT_R$.

Le circuit émetteur 10 délivre un signal à l'antenne 1 par l'intermédiaire du duplexeur 2 dont la fréquence fe(t) varie avec le temps selon une loi se répétant périodiquement sur des intervalles du temps $NT_R$,

$$f_e(t) = f_0 - mt \quad \text{où} \quad m = \left| \frac{\Delta F}{T_R} \right|$$

est la valeur absolue de la pente de modulation et $f_0$ la fréquence nominale du circuit 10.

Le terme de fréquence $-mt$ est donné par l'oscillateur 16 délivrant une tension modulée en fréquence pr une dent de scie à la période $NT_R$, tension qui commande la fréquence du circuit émetteur 10 par exemple à l'aide d'une boucle de phase. Le circuit modulateur 15 délivre des impulsions à la période T modulant le signal du circuit émetteur 10. Un circuit d'horloge 9 commande le modulateur 15 et le duplexeur 2 en synchronisme. Si une cible est située à la distance d du radar et est animée d'une vitesse radiale relative $V_R$, le signal écho revient à l'antenne 1 avec une fréquence $f_R$ donnée par l'équation:

$$f_R = f_e(t-\tau) + F_d \quad \text{avec} \quad \tau = \frac{2d}{v\,c} \quad \text{et} \quad Fd = \frac{2VR}{v\,c} f_0$$

où $v_c$ est la vitesse de propagation de la lumière dans le milieu considéré et $F_d$ la fréquence Doppler due au mouvement de la cible:

$$f_R = f_0 - m(t-\tau) + F_d = f_e + m\tau + F_d$$

Ainsi le battement du signal à la réception avec le signal prélevé sur le circuit émetteur 10, décalé d'une valeur fixe de façon à permettre une amplification à fréquence intermédiaire, est à fréquence constante. La transposition est faite par le mélangeur 4 qui reçoit, d'une part le signal reçu amplifié par l'amplificateur 3, et d'autre part un signal délivré par un oscillateur 12 préalablement mélangé dans le circuit de transposition de fréquence 11 à un signal de fréquence $(f_0 - mt)$ égale à la fréquence porteuse $f_0$ modulée en fréquence, fourni par exemple par l'émetteur 10. Le signal délivré par l'oscillateur 12 a une fréquence $f_1$ telle que:

$$f_1 = F_i + m \cdot \tau + f_d.$$

3

$F_i$ est la fréquence intermédiaire correspondant à l'amplificateur 5, et $f_d$ un terme égal à

$$\frac{2\,f_0}{v_c}\,[Vm\cos\theta + V_k]$$

où Vm est le module de la vitesse du porteur, $\theta$ l'angle formé par la vitesse $\overrightarrow{Vm}$ du porteur par rapport au sol et la direction de la cible, et $V_k$ le module de la vitesse radiale de la cible.

A la sortie de l'amplificateur à fréquence intermédiaire 5, un second changement de fréquence est opéré à l'aide du mélangeur 6 connecté à l'oscillateur local 13.

A ce stade de traitement du signal deux cibles sont confondues si

$$m\tau_1 + F_{d1} = m\tau_2 + F_{d2} \text{ et si } \tau_1 - \tau_2 = kT_R$$

(k entier) et

$$\tau_{1,2} = \frac{2\,d_{1,2}}{v\,c}\,.$$

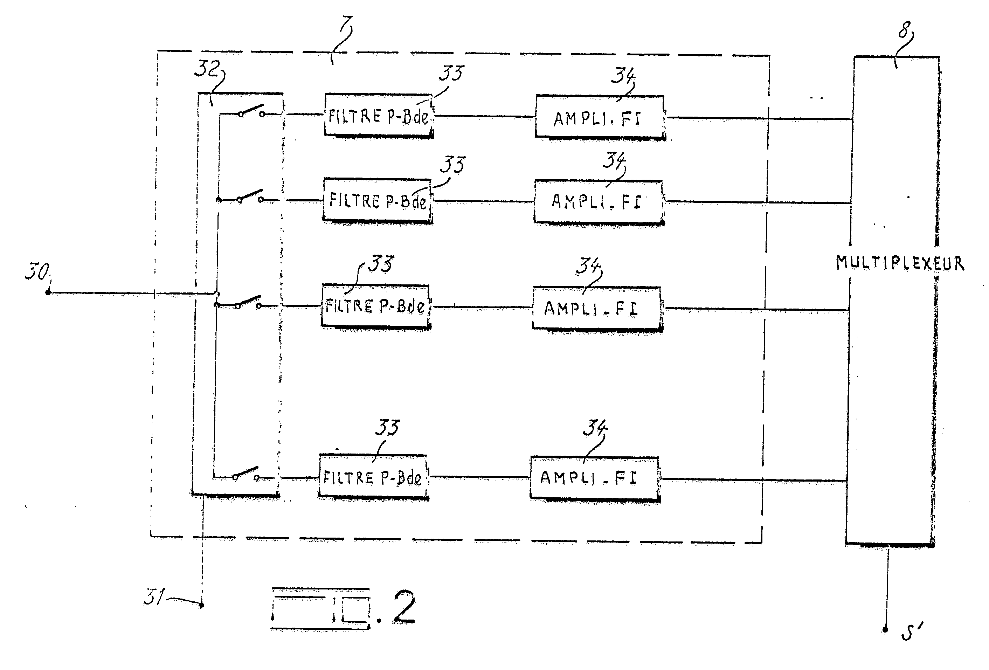

Un circuit 7 de portes distance est placé à la sortie du mélangeur 6; le fonctionnement de ce circuit est illustré par la figure 2. Il comporte un ensemble 32 de P interrupteurs commandés à intervalle régulier par permutation circulaire par le signal du modulateur 15 de sorte que chaque cycle de commande a une période égale à $T_R$, P est défini par

$$P = \frac{TR}{\gamma} - 1$$

où $\gamma$ représente la largeur des impulsions émises.

Chaque interrupteur commandé est connecté à un multiplexeur 8 par l'intermédiaire d'un filtre passe-bande 33 monté en série avec un amplificteur à fréquence intermédiaire 34 pouvant comporter un changement de fréquence non représenté sur la figure; à titre d'exemple numérique particulier la bande passante du filtre 33 est de 7 kHz environ et de manière générale est suffisamment large en fréquence pour laisser passer au moins la fréquence Doppler de la cible $F_d$ additionnée de l'incertitude due au gisement de la cible. Les informations issues des différents amplificateurs à fréquence intermédiaire 34 sont transmises successivement par le multiplexeur 8 à deux mélangeurs 20 et 21 permettant à l'aide de l'oscillateur 14 et du déphaseur de $\pi/2$, 19, de transposer chacun des signaux utiles à fréquence voisine de zéro selon deux composantes en quadrature. Les circuits d'échantillonnage 22 et de codage 23 numérisant ces informations de manière à permettre un traitement aisé par les filtres Doppler 24. Enfin un calculateur 25, non décrit ici, extrait de ces informations les valeurs de d et $V_R$ permettant de caractériser les cibles et de permettre éventuellement la poursuite ultérieure de l'une d'entre elles.

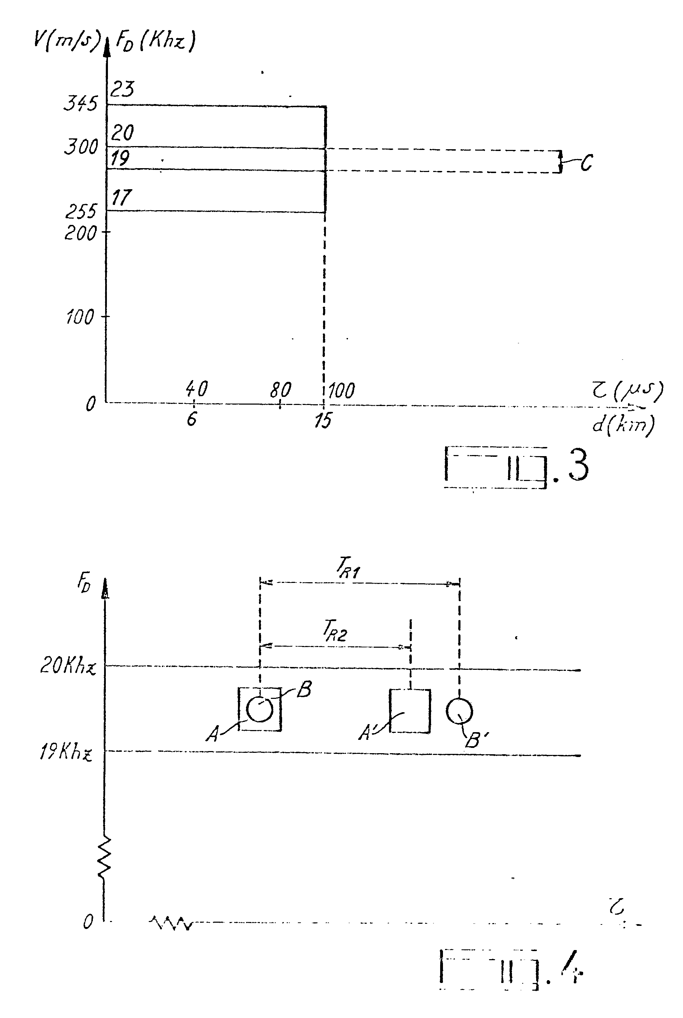

La figure 3 montre les domaines respectifs, en fréquence Doppler, des cibles et des échos de sol notés C pour un exemple particulier non limitatif, correspondant à l'utilisation du radar à modulation de fréquence selon l'invention dans un autodirecteur de missile. La bande de fréquence C, de 19 à 20 kHz correspond alors aux échos parasites de sol situés dans le lobe principal de l'antenne. En réalité, si la gamme de fréquence Doppler supérieure à 20 kHz est exempte de bruit dû aux échos de sol, celle inférieure à 19 kHz présente un aux résiduel de bruit d'échos de sol dû aux lobes secondaires de l'antenne de l'autodirecteur.

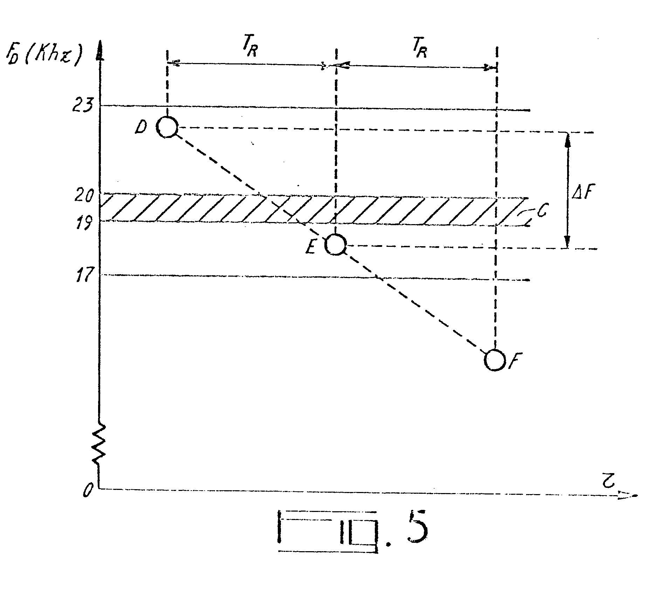

Le choix d'un émetteur à l'état solide, du fait de sa faible puissance d'émission, conduit à un facteur de forme des impulsions émises supérieur à un minimum non réglable, de plus, la nécessité de poursuivre la cible à une distance aussi courte que possible avec une antenne unique, interdit l'utilisation d'impulsions trop larges. Cet encadrement de valeur conduit à choisir une valeur de la période de répétition $T_R$ des impulsions supérieure à une certaine valeur mimimale, qui entraîne toutefois que deux cibles A et B peuvent être confondues dans une même case distance. Cette ambiguïté est levée cependant par l'utilisation d'au moins deux cycles de mesures séparés correspondant à deux valeurs distinctes $T_{R1}$ et $T_{R2}$ de la période de répétition des impulsions. Cette levée d'ambiguïté est représentée sur la figure 4 pour le cas de deux périodes distinctes de répétition en l'absence de modulation de fréquence.

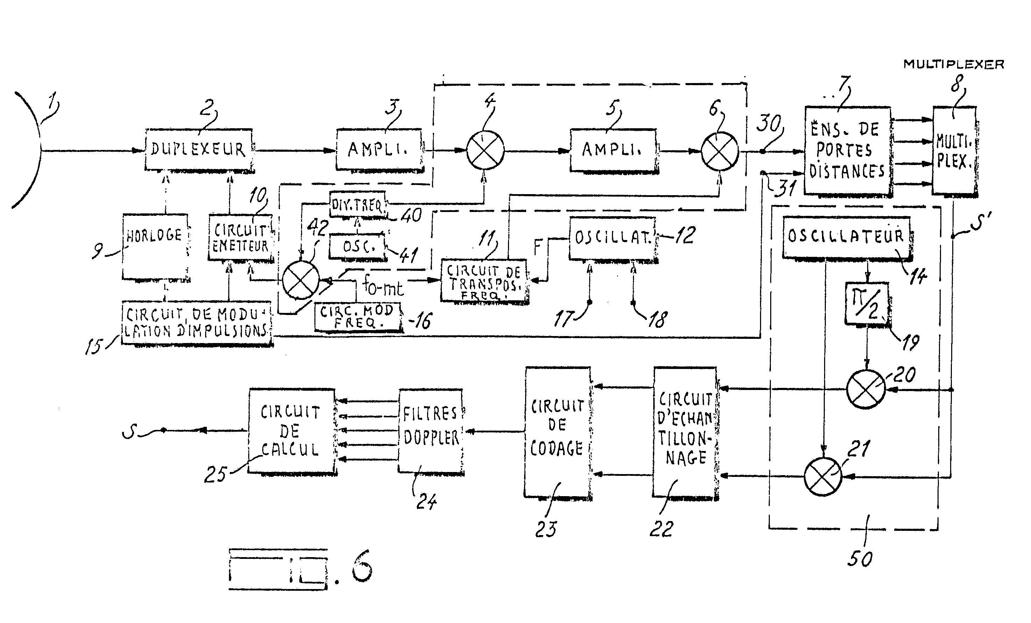

Si, comme cela est le cas pour l'exemple montré à la figure 3, la fréquence Doppler $F_d$ de la cible est légèrement inférieure à 20 kHz elle risque d'interférer avec les réponses des éléments de sol ou échos fixes, correspondant à la zone du bruit maximum. Cet inconvénient est évité suivant la présente invention par un choix convenable de la pente de la modulation de fréquence. En fonction de l'exemple numérique considéré, une valeur acceptable est telle qui $\Delta F \geq 4$ kHz. Cette situation est illustrée par la figure 5. En effet, une telle valeur permet à une cible en rapprochement D de ne pas interférer avec le bruit principal C, dû aux échos de sol, et à une cible en éloignement E, de donner un écho dont la fréquence Doppler est également en dehors de la zone C de bruit maximum. En fait comme des expériences l'ont montré toutes les valeurs de $\Delta F$ permettant d'éviter lorsque c'est possible la zone de bruit centrale C sont admissibles et permettent le fonctionnement correct du radar objet de l'invention. Dans un mode de réalisation préférentiel de l'invention, la valeur de $\Delta F$ sera choisie assez faible de façon que la première ambiguité distance donnée par l'expression

$$\frac{1}{|\Delta F|} \quad \frac{v\,c}{2}$$

où $v_c$ est la vitesse de la lumière dans le milieu considéré reste supérieure à la distance maximum des échos fixes gênants.

La largeur $\gamma$ des impulsions émises est choisie à peu près égale à $1/N \cdot \Delta F$, où N représente le nombre d'impulsions émises pendant une période $NT_R$.

Une variante de réalisation de ce dispositif est représentée figure 6. Dans ce second mode de realisation l'oscillateur local 13 est supprimé. La sortie du circuit de transposition de fréquence 11 est alors connectée non pas au premier mélangeur 4 mais au second mélangeur 6. De plus un cinquième mélangeur 42 est prévu connecté entre l'oscillateur modulé en fréquence 16 et le circuit émetteur 10. Enfin, un oscillateur à fréquence commandable 41 est connecté aux mélangeurs 4 et 42 par l'intermédiaire d'un circuit diviseur de fréquence 40 ou directement. Les autres éléments ainsi que leurs fonctions sont inchangés.

Les modifications introduites dans le dispositif ont pour but de modifier la fréquence émise, et donc la fréquence reçue de la même quantité permettant ainsi une liberté dans la fréquence émise pouvant se révéler très utile en présence de brouilleur, les fréquences intermédiaires restant constantes.

On a ainsi décrit un radar à modulation de fréquence et son application à un autodirecteur de missile.

## Revendications

1. Radar aéroporté à modulation de fréquence pour la détection de cibles, associé à une antenne (1) émission-réception et à un duplexeur (2) alimenté par une partie émission qui comprend des moyens d'émission (10) recevant, délivré par des premiers moyens de modulation (16) pour la modulation en fréquence du signal émis, un signal de modulation en dent de scie d'amplitude $N \cdot \Delta F$ et de période $N \cdot T_R$ avec N un nombre entier quelconque et, délivré par des deuxièmes moyens de modulation (15) un signal pour la modulation en impulsions du signal émis, ledit duplexeur délivrant les signaux reçus par l'antenne (1) à une partie réception qui comprend en série: des premiers moyens de transposition en fréquence (4, 6) qui reçoivent sur une première entrée les signaux échos réfléchis par les cibles et sur une deuxième entrée des signaux de fréquence égale à la somme, effectuée dans des deuxièmes moyens de transposition (11), de la fréquence du signal issu d'un premier oscillateur (12) et de la fréquence porteuse modulée en fréquence et prélevée sur les moyens d'émission (10); des moyens de sélectivité en distance (7, 8); des moyens de démodulation (50), ledit radar étant caractérisé en ce que, les moyens de réception comprenant en outre des moyens d'échantillonnage (22), de codage (23) et de filtrage (24) des signaux démodulés, la modulation en impulsions du signal émis est telle que chaque impulsion de modulation délivrée par les deuxièmes moyens de modulation (15) a une durée $\gamma$ sensiblement égale à $\gamma = 1/N \cdot \Delta F$, une période $T_R$, et en ce que les impulsions sont au nombre de N pendant une période $NT_R$ du signal en dent de scie généré par les premiers moyens de modulation (16), de façon que les résolutions en distance données par la modulation en impulsion et la modulation en fréquence soient voisines.

2. Radar aéroporté à modulation de fréquence selon la revendication 1, caractérisé en ce que le signal délivré par le premier oscillateur (12) a une fréquence (F) telle que les signaux délivrés par les premiers moyens de transposition (4, 6) sont à fréquence constante $F'_i$.

3. Radar aéroporté à modulation de fréquence selon la revendication 1 ou 2, caractérisé en ce que le signal délivré par le premier oscillateur (12) a une fréquence

$$F = F_i + m \cdot \tau + f_d,$$

dans laquelle $F_i$ est une fréquence intermédiaire constante,

$$m = \frac{|\Delta F|}{T_R}$$

représente la valeur absolue de la pente du signal de modulation délivré par les premiers moyens de modulation (16),

$$\tau = \frac{2\,d}{V_c}$$

est un retard représentatif de la distance d de recherche choisie, Vc est la vitesse de la lumière dans le milieu considéré, $f_d$ est égal à

$$2 \frac{f_0}{Vc} (V_m \cos \theta + V_k)$$

avec Vm le module de la vitesse du porteur du radar, $V_k$ le module de la vitesse radiale de la cible, fo la fréquence nominale émise et O l'angle entre la vitesse $\overrightarrow{V_m}$ du porteur et la direction de la cible par rapport au radar.

4. Radar aéroporté à modulation de fréquence selon l'une quelconque des revendications 1 à 3, caractérisé en ce que les premiers moyens de transposition de fréquence (4, 6) comprennent un premier mélangeur (4) dont les entrées sont respectivement les première et deuxième entrées des moyens de transposition de fréquence et qui délivre un signal à une première fréquence intermédiaire $F_l$ appliqué, par l'intermédiaire d'un amplificateur (5), sur la première entrée d'un deuxième mélangeur (6) recevant sur une deuxième entrée le signal à fréquence constante délivré par un deuxième oscillateur (13) et délivrant un signal à la fréquence constante $F'_l$ à l'entrée (30) des moyens de sélectivité en distance (7, 8).

5. Radar aéroporté à modulation de fréquence selon l'une quelconque des revendications 1 à 3, caractérisé en ce que les premiers moyens de transposition (4, 6) de Fig. 6 fréquence comprennent un premier mélangeur (4) dont la première entrée constitue la première entrée des premiers moyens de transposition, dont le deuxième entrée est alimentée par un deuxième oscillateur (41), commandé en fréquence, et qui délivre par l'intermédiaire d'un amplificateur (5) les signaux échos transposés sur la première entrée d'un deuxième mélangeur (6) alimenté, sur sa deuxième entrée constituant la deuxième entrée des premiers moyens de transposition, par les signaux délivrés par les deuxièmes moyens de transposition (11), la sortie dudit deuxième mélangeur (6) délivrant des signaux échos à fréquence constante à l'entrée (30) des moyens (7, 8) de sélectivité en distance et en ce que les rampes de fréquence de pente m délivrées par les premiers moyens de modulation (16) sont, avant d'être appliqués à l'entrée des moyens d'émission (10), transposées en fréquence par des troisièmes moyens de transposition (42) recevant sur une première entrée lesdites rampes de fréquences délivrées par les premiers moyens de modulation (16) et sur une deuxième entrée le signal délivré par le deuxième oscillateur (41).

6. Radar aéroporté à modulation de fréquence selon la revendication 5, caractérisé en ce que la sortie du deuxième oscillateur (41) est connectée à la deuxième entrée du premier mélangeur (4) et des troisièmes moyens de transposition (42) par l'intermédiaire d'un diviseur de fréquence (40).

7. Radar aéroporté à modulation de fréquence selon l'une quelconque des revendications 1 à 6, caractérisé en ce que les moyens de sélectivité en distance (7, 8) comprennent un ensemble (7) de P portes distance constituées chacune par un interrupteur (32) commandé par les deuxièmes moyens de modulation (15) et connecté en série avec un filtre passe-bande (33) et un amplificateur à fréquence intermédiaire (34), l'ensemble (7) de portes distance alimentant les moyens de démodulation (50) par l'intermédiaire d'un multiplexeur (8).

8. Radar aéroporté à modulation de fréquence selon la revendication 7, caractérisé en ce que les interrupteurs (32) sont commandés à intervalle régulier par permutation circulaire par le signal (31) du modulateur (15), chaque cycle de commande ayant une periode égale à $T_R$.

9. Radar aéroporté à modulation de fréquence selon la revendication 7 caractérisé en ce que la bande passante de chaque filtre (33) est supérieure à la somme de la bande de fréquences Doppler que l'on désire mesurer et de l'incertitude sur cette vitesse Doppler due au gisement de la cible.

10. Radar aéroporté à modulation de fréquence selon l'une quelconque des revendications 1 à 9, caractérisé en ce que le moyen de modulation en fréquence (16) est un oscillateur délivrant une tension modulée en dent de scie avec une pente négative.

11. Radar aéroporté à modulation de fréquence selon l'une quelconque des revendications 1 à 10, caractérisé en ce que le moyen d'émission (10) comporte un oscillateur à éléments semiconducteurs.

12. Utilisation d'un radar à modulation de fréquence selon l'une quelconque des revendications 1 à 11 dans un auto-directeur de missile.

## Patentansprüche

1. Frequenzmodulationsradargerät zum Aufspüren von Zielen, das mit einer Sende-Empfangs-Antenne (1) und einem Duplexer (2) verbunden ist, der von einem Sendemittel (10) enthaltenden Sendeteil gespeist wird, die ein von ersten Modulationsmitteln (16) zur Frequenzmodulation des abgestrahlten Signals abgegebenes sägezahnartiges Modulationssignal mit der Amplitude N · $\Delta$F und der Periode N · $T_R$, wobei N irgendeine ganze Zahl ist, und ein von zweiten Modulationsmitteln (15) abgegebenes Signal zur Impulsmodulation des abgestrahlten Signals empfängt, wobei der Duplexer (2) die durch die Antenne (1) empfangenen Signale an einen Empfangsteil abgibt, die in Serie enthalten: erste Frequenztransponierungsmittel (4, 6), die über einen ersten Eingang die von den Zielen reflektierten Echosignale empfangen und über einen zweiten Eingang Signale, deren Frequenz gleich der in zweiten Transponierungsmitteln (11) ermittelten Summe der Frequenz des von einem ersten Oszillator (12) gelieferten Signals und der frequenzmodulierten und den Sendemitteln (10) entnommenen Trägerfrequenz ist; Streckenauswahlmittel (7, 8); Demodulationsmittel (50), wobei das Radargerät dadurch gekennzeichnet ist, daß, wobei die Empfangsmittel zudem Probenahmemittel (22), Verschlüsselungsmittel (23) und Mittel zum Filtrieren (24) der demodulierten Signale umfassen, die Impulsmodulation des abgestrahlten Signals dergestalt ist, daß jeder durch die zweiten Modulationsmittel (15) abgegebene Modulationsimpuls eine Dauer $\gamma$ hat, die ungefähr gleich $\gamma = 1/N \cdot \Delta F$ ist, eine Periode $T_R$, und dadurch, daß die Impulse in N Zahl während einer Periode $NT_R$ des durch die ersten Modulationsmittel (16) erzeugten sägezahnformigen Signals sind, so daß die durch die Impulsmodulation und Frequenzmodulation gegebenen Streckenauflösungen aneinander angrenzen.

2. Frequenzmodulationsradargerät an Bord eines Luftfahrzeugs nach Anspruch 1, dadurch gekennzeichnet, daß das von dem ersten Oszillator (12) abgegebene Signal eine derartige Frequenz (F) hat, daß die durch die ersten Transponierungsmittel (4, 6) abgegebenen Signale die konstante Frequenz $F'_i$ aufweisen.

3. Frequenzmodulationsradargerät an Bord eines Luftfahrzeugs nach Anspruch 1 oder 2, dadurch gekennzeichnet, daß das durch den ersten Oszillator (12) abgegebene Signal eine Frequenz

$$F = F_i + m \cdot \tau + f_d$$

hat, in der $F_I$ eine konstante Mittelfrequenz ist,

$$m = \frac{|\Delta F|}{T_R}$$

den absoluten Wert der Neigung des von den ersten Modulationsmitteln abgegebenen Modulationssignals darstellt,

$$\tau = \frac{2\,d}{Vc}$$

eine dem gewählten Suchabstand d entsprechende Verzögerung, Vc die Lichtgeschwindigkeit in der in Erwägung gezogenen Umgebung ist, f d gleich

$$2\,\frac{f_0}{Vc}\,(V_m \cos \theta + V_k)$$

ist, mit $V_m$ dem Modul der Geschwindigkeit des Radargeräteträgers, $V_k$ dem Modul der radialen Geschwindigkeit des Ziels, $f_0$ die abgestrahlte Nominalfrequenz und $\theta$ der Winkel zwischen der Geschwindigkeit $\vec{V_m}$ des Trägers un der Richtung des Ziels im Verhältnis zum Radargerät.

4. Frequenzmodulationsradargerät an Bord eines Luftfahrzeugs nach einem der Ansprüche 1 bis 3, dadurch gekennzeichnet, daß die ersten Frequenztransponierungsmittel (4, 6) einen ersten Mischer (4) umfassen, dessen Eingänge jeweils die ersten und zweiten Eingänge der Frequenztransponierungsmittel sind und der ein Signal mit einer bestimmten Mittelfrequenz $F_i$ abgibt, das über einen Verstärker (5) an den ersten Eingang eines zweiten Mischers (6) angegeben wird, der an einem zweiten Eingang das von einem zweiten Oszillator (13) abgegebene Signal mit konstanter Frequenz empfängt und ein Signal mit der konstanten Frequenz F' an den Eingang (30) der Streckenauswahlmittel (7, 8) abgibt.

5. Frequenzmodulationsradargerät an Bord eines Luftfahrzeugs nach einem der Ansprüche 1 bis 3, dadurch gekennzeichnet, daß die ersten Frequenztransponierungsmittel (4, 6) Fig. 6 einen ersten frequenzgesteuerten Mischer (4) umfassen, dessen erster Eingang den ersten Eingang der ersten Transponierungsmittel bildet, und dessen zweiter Eingang von einem zweiten frequenzgesteuerten Oszillator (41) gespeist wird, und der über einen Verstärker (5) die transponierten Echosignale an den ersten Eingang eines zweiten Mischers (6) abgibt, der an seinem zweiten, den zweiten Eingang der ersten Transpositionsmittel (11) bildenden Eingang durch die von den zweiten Transponierungsmitteln (11) abgegebenen Signalen gespeist wird, wobei der Ausgang des zweiten Mischers (6) Echosignale mit konstanter Frequenz an den Eingang (30) der Streckenauswahlmittel (7, 8) abgibt und dadurch, daß die von den ersten Modulationsmitteln (16) abgegebenen Frequenzneigungen m, bevor sie an den Eingang der Sendemittel (10) angebracht werden, durch dritte Transponierungsmittel (42) frequenztransponiert werden, die an einem ersten Eingang die durch die ersten Modulationsmittel (16) abgegebenen Frequenzneigungen und an einem zweiten Eingang das von einem zweiten Oszillator (41) abgegebene Signal erhalten.

6. Frequenzmodulationsradargerät an Bord eines Luftfahrzeugs nach Anspruch 5, dadurch gekennzeichnet, daß der Ausgang des zweiten Oszillator (41) über einen Frequenzteiler (40) mit dem zweiten Eingang des ersten Mischers (4) und mit dritten Transpositionsmitteln (42) geschaltet ist.

7

7. Frequenzmodulationsradargerät an Bord eines Luftfahrzeugs nach einem der Ansprüche 1 bis 6, dadurch gekennzeichnet, daß die Streckenauswahlmittel (7, 8) eine Gruppe (7) von P Abstandsgattern umfassen, von denen jedes durch einen Unterbrecher (32) gebildet ist, der von den zweiten Modulationsmitteln (15) gesteuert wird und mit einem Paßbandfilter (33) in Reihe geschaltet ist und einen Mittelfrequenzverstärker (34), wobei die Gruppe (7) der Abstandsgatter die Demodulationsmittel (50) über einen Multiplexer (8) speist.

8. Frequenzmodulationsradargerät an Bord eines Luftfahrzeugs nach Anspruch 7, dadurch gekennzeichnet, daß die Unterbrecher in regelmäßigen Abständen durch das Signal (31) des Modulators (15) mittels kreisartiger Pemutation gesteuert werden, wobei jeder Steuerzyklus eine Periode hat, die gleich TR ist.

9. Frequenzmodulationsradargerät an Bord eines Luftfahrzeugs nach Anspruch 7, dadurch gekennzeichnet, daß das Paßband jedes Filters (33) größer ist als die Summe des Dopplerfrequenzenbandes, das man zu messen wünscht, und der Unsicherheit bezüglich dieser Dopplergeschwindigkeit infolge der Lage des Ziels.

10. Frequenzmodulationsradargerät an Bord eines Luftfahrzeugs nach einem der Ansprüche 1 bis 9, dadurch gekennzeichnet, daß das Fequenzmodulationsmittel (16) ein eine sägezahnartig modulierte Spannung mit einer negativen Neigung liefernder Oszillator ist.

11. Frequenzmodulationsradargerät an Bord eines Luftfahrzeugs nach einem der Ansprüche 1 bis 10, dadurch gekennzeichnet, daß die Sendemittel (10) einen Oszillator mit Halbleiterelementen umfassen.

12. Benützung eines Frequenzmodulationsradargeräts nach einem der Ansprüche 1 bis 11 in einer automatischen Raketenlenkeinrichtung.

## Claims

1. Airborne frequency-modulation radar for the detection of targets, associated to an emitting-receiving antenna (1) and a duplexer, (2) supplied by an emitting part that comprises emitting means (10) receiving, supplied by first modulating means (16) for the frequency modulation of the emitted signal, a saw-tooth shaped modulation signal of $N \cdot \varDelta F$ amplitude and $N \cdot T_R$ period with N being any integer and, delivered by second modulating means (15) a signal for the impulsion modulation of the emitted signal, the said duplexer delivering the signals received by the antenna (1) to a receiving part that comprises in series: first frequency transposing means (4, 6) that receive on a first input the echo signals reflected by the targets and on a second input signals the frequency of which is equal to the sum, carried out in the second transposing means (11), of the frequency of the signal issued from a first oscillator (12) and of the frequency y carrier, modulated in frequency and drawn off the emitting means (10); distance selectivity means (7, 8); demodulation means (50), the said radar being characterized in that, the receiving means comprising furthermore means of sampling (22), coding (23) and filtering (24) the demodulated signals, the impulsion modulation of the signal emitted is such that each modulation pulse delivered by second modulation means (15) has a duration $\gamma$ substantially equal to $\gamma = I/N \cdot \varDelta F$, a period $T_R$, and in that there are N impulses during a period $NT_R$ of the saw-tooth shaped signal generated by the first modulating means (16), so that the resolutions in distance given by the impulse modulation and the frequency modulation in frequency are close.

2. Airborne frequency-modulation radar according to claim 1, characterized in that the signal delivered by the first oscillator (12) has a frequency (F) such that the signals delivered by the first transposing means (4, 6) are at constant frequency $F'_1$.

3. Airborne frequency-modulation radar according to claims 1 or 2, characterized in that the signal delivered by the first oscillator (12) has a frequency

$$F = F_i + m \cdot \tau + F_d,$$

in which $F_1$ is a constant intermediary frequency,

$$m = \frac{|\varDelta F|}{T_R}$$

represents the asolute value of the slope of the modulation signal delivered by the first modulating means (16),

$$\tau = \frac{2d}{Vc}$$

a time lag representative of the selected search distance d, $V_C$ is the light speed in the medium involved, $f_d$ is equal to

$$2 \frac{f_0}{Vc} (V_m \cos \theta + V_k)$$

with $V_m$ the modulus of the speed of the radar carrier, $V_k$ the modulus of the radial speed of the target, $f_0$ the emitted nominal frequency and 0 the angle between the speed $V_m$ of the carrier and the direction of the target with respect ot the radar.

4. Airborne frequency-modulation radar according to any one of claims 1 to 3, characterized in that the first frequency transposing means (4, 6) comprising a first mixer (4) the inputs of which are respectively the first and second inputs of the frequency transposing means and that delivers a signal at a first intermediary frequency F, applied, by the intermediary of an amplifier (5), on the first input of a second mixer (6) receiving on a second input the signal at a constant frequency delivered by a second oscillator (13) and delivering a signal at the constant frequency $F_i$ at the input (30) of the distance selectivity means (7, 8).

5. Airborne frequency-modulation radar according to any of claims 1 to 3, characterized in that the first frequency transposing means (4, 6 fig. 6) comprise a first mixer (4) the first input of which constitutes the first input of the transposing means, the second input of which is fed by a second oscillator (41), controlled in frequency, and that delivers through the intermediary of an amplifier (5) echo signals transposed on the first input of a second mixer (6) which is fed, on its second input constituting the second input of the first transposing means, by the signals delivered by the second transposing means (11), the output of the said second mixer (6) delivering echo signals at constant frequency, at the input (30) of the distance selectivity means (7, 8) and in that the frequency gradients of slope m delivered by the first modulating means (16) are, prior to being applied at the input of the emitting means (10), transposed in frequency by third transposing means (42) receiving on a first input the said frequency gradients delivered by the first modulation means (16) and on a second input the signal delivered by the second oscillator (41).

6. Airborne frequency-modulation radar according to claim 5, characterized in that the output of the second oscillator (41) is connected to the second input of the first mixer (4) and the third transposing means (42), through the intermediary of a frequency divider (40).

7. Airborne frequency-modulation radar according to one of claims 4 to 6, characterized in that the distance selctivity means (7, 8) comprise a group (7) of P distance gates each constituted by a switch (32) controlled by the second modulating means (15) and connected in series with a pass-band filter (33) and an intermediary frequency amplifier (34), the group (7) of distance gates supplying the demodulation means (50) through the intermediary of a multiplexer (8).

8. An airborne frequency-modulation radar according to claim 7, characterized in that the switches (32) are controlled at regular interval by circular permutation by the signal (31) of the modulator (15), each control cycle having a period equal to $T_R$.

9. Airborne frequency-modulation radar according to claim 7, characterized in that the passing band of each filter (33) is superior to the sum of the Doppler frequencies band that it is desired to measure and of the incertitude on this Doppler speed due to the position of the target.

10. Airborne frequency-modulation radar according to any one of claims 1 to 9, characterized in that the frequency modulation means (16) is an oscillator delivering a modulated saw-teeth shaped voltage having a negative slope.

11. Airborne fequency-modulation radar according to any one of claims 1 to 10, characterized in that the emission means (10) comprise an oscillator having solid state elements.

12. Utilization of a frequency-modulation radar according to any one of 1 to 11 in a self controlled missile.

**FIG. 1**

Référence du document : 0 028 182

FIG.2

MULTIPLEXEUR

AMPLI.FI

FILTRE P-Bde

FIG.3

FIG.4

FIG. 5

Fig. 6